# EUROPEAN PATENT SPECIFICATION

(11) **EP 2 106 419 B1**
(45) Date of publication and mention of the grant of the patent: **29.03.2017**
(21) Application number: 08708144.4
(22) Date of filing: 24.01.2008
(51) Int. Cl.: C08L 3/02, B65D 65/46

(54) **STARCH-BASED COMPOSITIONS AND RELATED USE AND OBTAINMENT PROCESS.**
ZUSAMMENSETZUNGEN AUF STÄRKEBASIS UND VERFAHREN ZU IHRER HERSTELLUNG UND VERWENDUNG
COMPOSITIONS À BASE D'AMIDON ET UTILISATION RELATIVE ET PROCÉDÉ D'OBTENTION

(30) Priority: 26.01.2007 PT 10364607; 07.03.2007 IT MI20070457
(43) Date of publication of application: 07.10.2009
(73) Proprietor: OBTUSA INVESTIMENTOS E GESTAO LIMIDADA, 9000 Funchal, Madeira (PT)
(72) Inventor: CARCANO, Cesare, I-21020 Casciago (Varese) (IT); MASCHERONI, ERIKA, I-22060 Figino Serenza (Como) (IT)
(74) Representative: Pistolesi, Roberto
(86) International application number: PCT/EP2008/050805
(87) International publication number: WO 2008/090195

(56) References cited:
- EP-A- 1 146 121
- EP-A- 1 483 963
- US-A- 4 917 904
- US-A- 5 922 379

## Description

The present invention has, as object, biodegradable compositions consisting of starch, a plasticising agent, proteins and transglutaminase; the process for obtaining said compositions; their use for producing biodegradable items, useful in particular for food product packaging, and the biodegradable items thus obtained.

### PRIOR ART

Various attempts to obtain compositions capable of combining excellent biodegradability characteristics with the necessary production and quality characteristics are known in the art, in order to obtain packaging products and disposable items, in particular for foods, which can be eliminated from the natural environment.

In particular, biodegradable polymer compositions are known in the art obtained from synthesis processes, such as for example polylactic acid, obtained from natural polymers through microorganisms, such as for example polyhydroxybutyrate, or obtained from natural products, with low environment impact and low cost, like polysaccharides.

For this latter natural polymer category, it is possible to find in the literature a considerable number of examples of biodegradable compositions, also for packaging, which differ from each other by the employed natural polymer, by the employed additives, by the production modes and by the different uses. Compositions for obtaining expanded products have been studied, for example studied, as in US patent US7067651, which describes a mixture comprising starch and water, and possibly a plasticiser like glycerol and its derivatives, a reinforcing agent such as limestone or diatomaceous powder, a binder which in particular can consist of egg white or soy proteins, in a base or salt. In the patent application EP1075188, compositions are described comprising starch, high percentages of protein, cellulose fibres and metal salt hydrates, with a density typical of expanded packaging.

Other expanded compositions useful for obtaining biodegradable products are moreover described in the international patent application WO9965977; in the European patent applications EP950690, EP696611 and in the patent application EP1347008; in the European patent application EP1035163; in the international application WO9210539; in the international patent application WO0220238 and in the Japanese application JP05278738.

Biodegradable compositions and their obtainment processes, adapted for the production of disposable products, are described for example in the European patent application EP474095; in the Chinese application CN1362449; in the German patent application DE19802718; in the Chinese patent application CN1339540 and in the international patent application WO2003046082.

The following documents regard biodegradable compositions adapted for injection moulding, extrusion or press-forming processes: the US patent US5288318; the international patent application WO9731979; the European patent application EP1258242; the European patent applications EP542155 and EP819147; the English patent application GB2050459; the European patent applications EP1241214 and EP1241215; the Japanese patent application JP3247707; the European patent application EP863942; the European patent application EP596437; the French patent application FR2691467 and the Italian patent application IT1060099.

In particular, the US patent US6506824 describes injection-moulded thermoplastic compositions which provide homogenous items, comprising starch, a cellulose ester, a plasticiser and a compatibiliser agent for the cellulose and starchy components, composed of polymers grafted with copolymers of ethylenevinyl alcohol, ethylene acrylic acid, aliphatic polyesters or amides. Biodegradable compositions adapted for packaging are described for example in the international patent application WO9950346; in the Chinese application CN1368517; in the European patent application EP775173 and in the international patent application WO0151557; in the international patent application WO2002088245; in the international patent application WO2001051556, where in particular in addition to starch, fibres and proteins are contained which are fixed to each other; in the German patent DE19841382; in the European patent application EP817804, where compositions are exemplified characterised by starch covalently bonded to the proteins, and in the German patent application DE3937168.

Compositions for packaging and for disposable products comprising modified starch and/or degraded starch and/or degrading agents are exemplified in the international patent application WO2005047385; in the European patent application EP1109858; in the patent application WO2001060898 and in the patent application EP1229075.

Mixtures for the production of packaging film, also edible, are for example described in the international patent application WO2003000060; in the European patent application EP506650; in the international patent application WO0049899. In particular, the Italian patent application IT1322991 describes a process for obtaining biodegradable films, also edible, based on natural polymers possibly mixed with proteins, which may be pre-cross-linked.

Compositions containing cross-linked polysaccharides and their related obtainment processes are described in the international patent application WO03035026; in the international patent applications WO0039214 and WO0039215; in the international patent application WO0130905 which crosslinks polysaccharides and proteins by means of a polyaldehyde; in the US patent US20030100739; in the European patent application EP1047725, where polysaccharides and proteins are conjugated; and in the international patent applications WO9319125 and WO9413737, where the cross-linking takes place by means of aldehydes, anhydrides or epoxides.

Compositions containing cross-linked and/or complexed polysaccharides are also used in other fields, as can be seen, for example, in the international patent application WO2004105485, which uses it as release vehicles in pharmaceutical or nutraceutical field; in the European patent application EP1466630, which uses them as absorbing means in sanitary material, and in the patent application EP140596 which uses them as bandage and suture constituents.

The starch-based compositions can also be used in the animal feed field. For such purpose one can view the patent application EP1241946, which describes objects adapted for being consumed by domestic animals comprising starch, proteins, edible fibres and hydrated metal salts, as well as the patent application US20060188632.

In the alimentary, pharmaceutical and cosmetic fields, the binding capacity of transglutaminase has been widely studied; such ubiquitous enzymes are widely diffused in the animal kingdom. These enzymes have the capacity to catalyse the formation of covalent bonds between the peptide bond of glutamine residues and the amino group of lysine residues of the protein side chains.

Protein or polysaccharide gels, obtained by means of transglutaminase, are described for example in the patent US4917904; in the Japanese patent application JP58149645; in the patent US5968568, in the Japanese patent JP2629886; in the international patent application WO2006056700; in the Japanese patent application JP2005229907, where in particular the controlled gelatinisation behaviour is studied of the starch covered with a protein component which has undergone cross-linking by transglutaminase.

In patent application EP982038, transglutaminase is used as cross-linking agent in a protein/polysaccharide covering agent containing an active ingredient. Transglutaminase was also used for modifying, by means of the aminopolysaccharide conjugation, the immunogenic properties of the proteins, their absorption or their possibilities for being applied in the medical field: one can view for example the international patent application WO0022103; the European patent application EP809110 and the international patent application WO2001079474.

### DESCRIPTION OF THE INVENTION

The applicant has found that a composition comprising natural polysaccharides, such as starch, plasticisers, proteins, transglutaminase and water, has optimal workability characteristics for producing rigid, semi-rigid and rubbery biodegradable items, preferably useful for packaging, and in particular suitable for contact with foods.

For the purpose of the present invention, with the expression "composition" or "composition of the present invention", except where otherwise specified, is intended the composition excluding the aqueous component.

The composition has starch in greatest quantity, which is present in the composition in a percentage which can vary from 40% to 70%, with an optimal range from 45% to 50% calculated in percentage excluding the aqueous component. The starch used can be Standard starch (characterised by a percentage by weight of amylase in the range of 18-30%), Waxy starch (characterised by a low percentage by weight of amylase, less than 5%) or starch with a high amylase content (amylase by weight in the range of 35% - 70%); the relative percentage of these three starch types can vary in the composition in the range of 0% - 100%. The starch can be native starch deriving from corn, potato, wheat, rice, tapioca, sorghum, rye or a combination thereof. Such starch mixture will from here on be indicated as "starch".

In order to improve the starch characteristics, i.e. to make the starch a thermoplastic product so to improve its workability and its final characteristics, a plasticiser agent is used, of polyalcohol type such as ethylene glycol, propylene glycol or glycerol. In particular, the optimal ratio by weight between the starch and the plasticiser varies in the range of 5:1 - 2:1, such that the preferred plasticiser percentage, with reference to the total weight of the composition, varies from 8% to 40%.

A further constituent of the composition of the invention is the protein component. Said protein component, which preferably must not have adhesive characteristics upon water contact, and thus not lead to surface viscosity problems, can have a randomised structure but must contain specific amino acids: in particular, it must contain glutamine (gln) and glycine (gly), or glutamine and lysine (lys), respectively in quantities equal to or greater than 3% and 7%, taking the total number of amino acids as equal to one hundred.

The protein component must moreover have a molecular weight sufficient to give rise, in the presence of a protein cross-linking agent, to a sensory-perceptible cross-linking, without the aid of specific instruments. In particular, it must have a molecular weight greater than 10 kDalton, with an optimal value greater than 30 kDalton and less than 180 kDalton.

The proteins adapted for use in the present invention are preferably of vegetal origin, since they have glutamine contents greater than the animal proteins; these can be derived from cereals or legumes such as soybeans, peas, wheat, beans and broad beans. The preferred percentage of the protein component is in the range of 0.5% - 5%, with an optimal range from 1% - 2% calculated in percentage with respect to the weight of the composition.

The above-described characteristics for the protein component make it adapted for the reaction with a cross-linking enzyme component, such as transglutaminase. The preferred transglutaminase in the present invention is derived from microorganisms, in particular from the genus *Streptoverticillium sp.,* preferably of the strain S-8112. Such transglutaminase, which is composed of a single polypeptide chain of 331 amino acids, with a molecular weight of 38 kDalton, permits a reaction between the lysine residues and the glutamine residues of the different polypeptide chains of the above-described protein component, thus forming the isopeptide bonds which give rise to protein aggregates stabilised by covalent bonds. In order to obtain an optimal cross-linking of the protein component, the transglutaminase, which is used in a mixture with maltodextrin in a preferably 1:100 ratio (from here on always indicated with transglutaminase), must be used in a percentage greater than or equal to 1% by weight with respect to the protein component (or from 0.005% to 0.05% of the composition, considering a protein content in the range of 0.5% - 5% of the same), with optimal percentage values in the range of 2% - 3%.

In order to have an optimal cross-linking, a suitable hydration level of the mixture is also important; such hydration is obtained by the addition of water during the mixing step, as reported below.

Cellulose is added to the described composition, such cellulose preferably having fibres of length in the range of 20 - 1000 µm, still more preferably 200 - 400 µm. The preferred diameter of the fibres varies from 20 - 35 µm, preferably from 28 - 32 µm. Such preferred dimensions are obtained by means of a previous bleaching and pulverisation treatment of the raw cellulose. The cellulose is present in the composition in quantities which can vary from 5% to 30%, preferably from 10% to 25%. Possibly, a part of the powder cellulose, which can vary from 4% to 15% of the composition, is a modified cellulose, for example in part esterified with stearic acid, carboxymethylated or hydroxypropylcarboxymethylated. In particular, the presence of stearic acid permits a reduction of the material viscosity during processing and the different functional groups of the cellulose permit a greater interaction of the same with the protein-saccharide matrix.

If it is desired to modify the mechanical properties, such as the Young's Modulus and tensile strength, a part of the starch present is modified starch.

Such modified starch is cationised starch, which is used in a percentage equal to about 1% of the possible cellulose present, in order to further favour the interaction and thus the formation of bonds between the cellulose provided with negative charges, and the cationised polysaccharide component. The formation of such bonds confers improved homogeneity and improved mechanical properties to the final items obtained with said composition.

As process agent, moreover, the composition can contain a lubricating agent, such as a stearate (preferably an alkaline metal or earth alkaline), in a percentage greater than 0.1% and less than or equal to 2%, an emulsifying agent in a percentage in the range of 0.5% - 5%, with a preferred range of 0.8% - 1.5%.

The emulsifying agent, which is preferably lecithin, still more preferably soy or sunflower, normally in powder form, permits a greater interaction between the components of the composition and an improved workability of the product in the subsequent thermal and mechanical working processes of the mixture and in the final forming step of the biodegradable product.

Finally, the composition can optionally contain an inorganic component, for example inorganic charges such as silica, zeolite, bentonite, kaolin and talc. Such inert charges can be used in nano-charge form, which thanks to their nanometric dimensions and to their hydrophilic nature are capable of being inserted in the macromolecular structure of the starch-base matrix and to form bonds therewith. Said inorganic charges, present in a percentage in the range of 0.1% - 10%, permit modifying both the humidity of the composition, by removing part of the free water, and the mechanical properties such as flexibility, rigidity and plasticity of the final product.

Such obtained mixture can provide for the addition of non-toxic colourings, in particular food colourings. Preferably, antioxidant agents are added in the mixture, preferably natural antioxidant agents, and in any case suitable for contact with foods, in order to extend the final product shelf life.

Preferably, said composition is formulated in granule form or in thermoformable sheets with bulk density varying from 0.7 to 1 g/cm³.

Forming the object of the present invention is hence a biodegradable composition comprising natural polysaccharides, like starch, plasticisers, proteins, transglutaminase and water, in particular formulated in granule form.

In particular, the present invention has as object a biodegradable composition comprising 40% - 70% starch, 8% - 40% plasticiser, 5% - 30% cellulose, 0.5% - 5 % proteins, 0.005% - 0.05% cross-linking enzyme, preferably transglutaminase, where the percentage values are all expressed with reference to the total weight of the composition (or where the sum of the single components represents 100% of the composition).

A further aspect of the present invention regards the process for the obtainment of the above-described composition and its granule formulation.

Initially, the starch and the plasticiser are mixed, preferably in a turbo mixer equipped with two speed types: a main speed and a peripheral speed.

Such starch-plasticiser mixture is subject to a dehydration process, preferably in a ventilation oven, at a temperature in the range of 80°C - 170°C, for a time in the range of 15 - 60 minutes, decreasing with the temperature increase.

The starch-plasticiser mixture thus obtained must undergo a cooling process, until it reaches a temperature equal to or less than 55 °C, before the addition of water, protein component and enzyme, in order to avoid the gelling of the starch, which would lead to a morphological and structural change of the mixture, and a denaturing of the protein components (proteins and enzyme).

Once the required temperature is attained, water is added, such water normally used in a quantity in the range of 20% - 50% of the total weight of the mixture, preferably in the range of 25 % - 35%.

The temperature of the mixture, after the addition of the aqueous component, must be preferably maintained in the range of 5°C - 54°C, with an optimal range of 35°C - 40 °C, in order to favour the quick reaction, i.e. in a time of less than 30 minutes, between the enzyme and the proteins, without deactivation of the enzymatic activity.

The mixture is maintained under stirring for a time in the range of 10 - 30 minutes, preferably 15 minutes, under a constant speed in the range of 2 to 8 m/s.

Once the protein cross-linking has been completed, the inert components can be added to the mixture, such as the abovementioned possibly modified cellulose and the possible modified starch. The inert components (or the cellulose) must be added after the formation of the matrix cross-linking; otherwise, the water would bind to the inert hydrophilic component which would no longer be available for the hydration of the protein and saccharide components, and the transglutamination reaction would thus not take place. Such mixture is subjected to a mixing process (normally in a turbo mixer) at a speed greater than 16 m/s, with optimal speed in the range of 25 m/s and 32 m/s, for a time of 1-2 minutes, maintaining a temperature less than 50°C.

The process agents are then added to the mixture, i.e. the lubricant and the emulsifier as described above, and there is a further step of mixing in the turbo mixer with the same process conditions used after the addition of inerts, which thus permit obtaining the composition, object of the invention.

The mixture thus obtained is subjected to a working process in an extruder, with the possibility of obtaining sheets or granules (pellets) at the end of the process: the mixture is inserted, by means of gravimetric doser, in an intermeshing, corotating twin screw extruder with head with holes of size of about 1-5 mm.

The extruder screw speed is set in the range of 70 - 150 r.p.m., and the pressure inside the extruder must be maintained at values less than 6 MPa and in any case such to permit a constant flow rate of the material through the extruder.

The extruder must be equipped with a degassing system for eliminating the excess of water, useful in the preceding steps for the starch hydration and for the protein cross-linking. The reduced pressure level must be less than 0.1MPa, with preferred values in the range of 0.02 - 0.06 MPa. Part of the water, in fact, must be maintained in the mixture so that the work process correctly takes place; the mixture exiting from the extruder must not have an absolute humidity of less than 10%.

The material slides inside the extruder, following a series of passages each characterised by a specific temperature and screw profile. The temperature in the different zones of the extruder can vary in the range of 75°C - 105°C, with the need to reach values around 90°C- 95°C; at these temperatures and in conditions of sufficient humidity (greater than 20% on the mixture) the starch granules are in fact broken with continuous diffusion, outside thereof, of its polymers (amylase and amylopectin). There is the maximum degradation of the polysaccharide component and a quick diminution of the density of the same.

In the intermeshing, corotating twin screw extruder, the thermal degradation is accompanied by a mechanical degradation due to the high pressures and to the cutting forces; for this reason, the chemical-physical properties of the mixture are the result of the mix of several variables: raw materials, geometry of the extruder components, flow rate, temperature, humidity, screw speed and torsional moment are the most important.

Subsequently, the material exits from the extruder and undergoes a cooling and drying process by means of air blowing in calenders with cooling rolls, with temperature set as variable in the range of 5°C - 15°C. The calender rolls are preferably made of Teflon in order to permit a regular sliding of the extruded product on the rolls, and consequently permit homogenous drying. The low temperature and the air flow thus permit a quick cooling. The amylase and amylopectin of the starch granule have the tendency to reassociate with each other in an ordered structure during the cooling step. The starch then degenerates until it attains a crystalline order, which permits stiffening the extrusion itself.

The material thus obtained is shaped in granules (pelletisation) of size in the range of 1 mm - 5 mm, preferably in the range of 2 mm - 4 mm, and is conditioned in standard conditions, i.e. at 23°C and 55% environmental humidity, until a dynamic equilibrium condition is attained with the environment.

A further object of the invention is therefore a process for obtaining a biodegradable composition consisting of starch, plasticiser agent, proteins and transglutaminase, and the granule formulation of the same.

A further aspect of the present invention relates to the use of the above-described biodegradable composition consisting of starch, plasticiser, proteins, transglutaminase and water, for the preparation of biodegradable items.

Such items are preferably useful for packaging, and in particular are suitable for contact with preferably dried foods, and thus for the primary food packaging (for example shallow trays, bowls, deep trays, plates, jars, cutlery, cups or bottles) or for the secondary food packaging. Always respecting the suitability for the contact with foods, it is possible to employ such composition for making kitchenware of all shapes, and all those objects adapted for contact/containment of foods usable for catering services or fast food.

The present invention is also related to the biodegradable items obtained by utilising the composition resulting from the above-described process.

Finally, the present invention is also related to the production process of said biodegradable items, starting from the composition of the present invention in granular form. For such purpose, the granules of the present invention are subjected to a thermoplastic forming process in an injection press, advantageously equipped with cold channel mould.

The extruder screw speed preceding the material exit nozzle in the injection press must be set in a range of 40 - 120 r.p.m. and the pressure inside the extruder must be maintained constant in the different zones of the extruder, except in the part near the material exit nozzle, where it must undergo a reduction of roughly 3x.

The movable mould and the counter-mould, which is fixed, have different temperatures: the movable mould temperature varies in the range of 75°C -90°C, while the counter-mould has a temperature in the range of 4°C - 10°C. The product is left in the mould for about 20 seconds, so that a quick cooling can occur, capable of conferring rigidity to the matrix.

The following examples have illustrative and non-limiting value.

### Example No. 1

### Preparation of a biodegradable composition comprising starch, plasticiser, proteins, transglutaminase and water

A powder composition is prepared containing:
- 200 g water
- 441.9 g Corn starch (30% Standard and 70% Waxy)
- 133 g 99.5 USP pure vegetable glycerine
- 100 g C220 powder cellulose
- 50 g sodium carboxymethylcellulose
- 50 g C1000 powder cellulose
- 10 g soy protein extract (6.2 g lysine, 19.1 g glutamic acid, 4.2 g glycine, all with reference to 100 g of protein)
- 0.1 g Activia WM transglutaminase enzyme
- 10 g calcium stearate
- 5 g powder soy lecithin

The employed mixing protocol was the following:
- mixing of starch and glycerol for 5 minutes at 16 m/s;
- 15 minutes passage in 150°C ventilated oven;
- cooling of the mixture until ambient temperature (23-27°C) is achieved;
- addition of the soy proteins, the enzyme and the water and mixing at a speed of 8 m/s for 15 minutes at an average temperature of 30°C and in any case not greater than 50°C;
- addition of the cellulose, lecithin and calcium stearate and mixing at 16 m/s for 5 minutes;
- quick mixing (preferably at 32 m/s for 2 minutes or as needed) for the obtainment of a correct interaction between the components, making sure that the heat developed during the mixing process does not lead to an increase of the temperature above 50°C.
- extraction of the mixture from the mixer and cooling until room temperature is attained;
- closure of the mixture in moisture-barring bags until its use in the pelletisation step.

### Example No. 2

### Granulation of the biodegradable composition comprising starch, plasticiser, proteins, transglutaminase and water

The composition obtained in example 1 is subjected to an extrusion and granulation process, in order to obtain granules (pellets) of size in the range of 2 mm - 4 mm.

The composition of example 1 is inserted in an intermeshing, corotating twin screw extruder with circular head with 3 mm holes and equipped with gravimetric doser.

The process characteristics are the following:
- doser speed: 10 r.p.m.;
- screw speed: 120 r.p.m.;
- melting temperature: 95 °C
- head pressure: 9 bars;
- screw profile (screw diameter): variable in the different zones and increasing from 4 mm to over 40 mm;
- degassing level: 0.06 MPa;
- compressed air cooling with Teflon calender rolls
- pelletisation with rotating blade mill

### Example No. 3

### Moulding of the granules obtained from a biodegradable composition comprising starch, plasticiser, proteins, transglutaminase and water

The granules obtained in example 2 are subjected to a thermoplastic forming process in an injection press equipped with cold channel mould, in order to obtain biodegradable items.

The moulding protocol is the following:
- single-screw extruder with 55 mm screw diameter
- zone temperatures: Z₁:90/Z₂290/Z₃:85/Z₄:80/Z₅75
- movable mould temperature: 85 °C;
- counter-mould temperature: 10 °C;
- injection pressure: 16 MPa;
- counter-pressure: 0.3 MPa;
- cooling time: 20 seconds;

The obtained composition has the following properties:
- Granule bulk density: 0.698 g /cm³
- Granule MFI: 100°C/21kg : 3.26 g/600 s
- Granule absolute humidity: 13.25%
- Test piece EMod (N/mm²): 508.63 ± 11.17
- Test piece Fmax (N): 787.79 ± 4.15
- Test piece εBreak %(Extension of the break): 15.51 ± 4.36

The mechanical properties of the test pieces obtained were evaluated with Zwick Roell Z005 (Germany) dynamometer according to law ASTM D 882. The test pieces were made according to law with parallel section length equal to 80 mm and thickness equal to 4.5 ± 0.3 mm.

### Example No. 4

### Comparative tests

A pellet composition obtained by applying the same manufacturing protocol of example 1 to a formulation having the following composition:
- 200 g water
- 463 g Corn starch (30% Standard and 70% Waxy)
- 150 g 99.5 USP pure vegetable glycerine
- 100 g C220 powder cellulose
- 100 g sodium carboxymethylcellulose
- 10 g soy protein extract (6.2 g lysine, 19.1 g glutamic acid, 4.2 g glycine, all with reference to 100 g of protein)
- 0.25 g Activia WM transglutaminase enzyme
- 10 g calcium stearate
- 5 g powder soy lecithin
has been subjected to comparative tests versus the same composition not containing transglutaminase.

The water content has been determined after having conditioned the samples for 48 hours at 55% H.R. and 23°C.

The samples without transglutaminase presented a water content of 12,02±0,31 (%) whereas the samples with transglutaminase presented a water content of 10,74±0,39 (%).

The data shows that the presence of transglutaminase permits a higher loss of water after the extrusion process and during the sample's drying at the same condition of HR and temperature. The composition with transglutaminase is thus more suitable than that without transglutaminase for the manufacture of items for packaging, contact and/or containment of foods, fluids and/or liquids.

The mechanical properties of thermo formed samples have also been determined using a dynamometer mod. Z005- Zwick-Roell, according to the ASTM 882 (conditioning at 55% H.R and 23°C; repetitions for each type of sample: 10).

The results are summarized here-below:

### Samples without transglutaminase

EMod (Elastic Module)(N/mm²): 161,22 ± 10,35
RRupture (Force at Rupture) (N/mm²): 8,48 ± 0,44
Fmax (Force Max) (N): 387,47 ± 16,24
εRupture (Deformation at Rupture ) (%): 27,38 ± 1,04
Rmax (N/mm²): 9,69± 0,41
εFmax (Deformation at Force Max)(%): 24,47 ± 1,24

### Samples with transglutaminase

Mod (Elastic Module)(N/mm²): 193,10 ± 14,73
RRupture (Force at Rupture) (N/mm²): 9,38 ± 0,56
Fmax (Force Max) (N): 406,99 ± 24,94
εRupture (Deformation at Rupture) (%): 24,94 ± 1,14
Rmax (N/mm²): 10,17± 0,60
εFmax (Deformation at Force Max)(%): 22,32 ±1,01

The mechanical tests show that the samples with transglutaminase present a higher elastic module and lower deformation coefficient value than those without transglutaminase; consequently, the addition of transglutaminase enhances the rigidity of the samples, making them more suitable for certain types of applications such as the manufacture of shallow trays, bowls, deep trays, plates, cutlery, cups or bottles.

## Claims

1. A composition comprising 40% - 70% by weight of starch, 8% - 40% by weight of a plasticising agent, 5% - 30% by weight of cellulose, 0.5% - 5 % by weight of proteins and 0.005% - 0.05% by weight of a transglutaminase, with respect to the weight of the composition.

2. A composition according to claim 1, where the starch is present in a quantity in the range of 45% - 50% with respect to the weight of the composition.

3. A composition according to claim 1, where the ratio by weight between starch and plasticising agent is in the range of 5:1 - 2:1.

4. A composition according to claim 1, where the proteins are present in a quantity in the range of 1% and 2% with respect to the weight of the composition.

5. A composition according to claim 1, where the cellulose is present in a quantity in the range of 10% - 25% with respect to the weight of the composition.

6. A composition according to claim 1, where the transglutaminase is present in a quantity in the range of 2% - 3% with respect to the weight of the proteins.

7. A composition according to claim 1, where the plasticising agent is a polyalcohol.

8. A composition according to claim 7, where said polyalcohol is selected from among ethylene glycol, propylene glycol and glycerol.

9. A composition according to claim 1, where the cellulose fibres have length in the range of 20 - 1000 µm and/or diameter in the range of 20 - 35 µm.

10. A composition according to claim 1, where the proteins have a glutamine and glycine content or glutamine and lysine content respectively equal to or greater than 3% and 7% of the total amino acids.

11. A composition according to claim 1, where the proteins have molecular weight greater than 10 kDa, preferably in the range of 30 - 180 kDa.

12. A composition according to claim 1, where the proteins are of vegetable origin.

13. A composition according to claim 1, where the transglutaminase is from microorganisms, preferably from the genus *Streptoverticillium sp..*

14. A composition according to claim 1, comprising a lubricant, an emulsifier and/or mineral chargers.

15. A composition according to claims 1-14, **characterised in that** it is in granule form.

16. Items for packaging and/or containing and/or for alimentary use, essentially composed of a composition according to claims 1-15.

17. Items according to claim 16 **characterised by** being in the form of shallow trays, bowls, deep trays, plates, cutlery, cups or bottles.

18. Use of a composition according to claims 1-15 for the preparation of items for packaging, contact and/or containment of foods, fluids and/or liquids.

19. Use according to claim 18, **characterised in that** said articles are in the form of shallow trays, bowls, deep trays, plates, jars, cutlery, cups or bottles.

20. Process for producing a composition according to claims 1-15, comprising the following steps:
a) mixing starch and plasticiser;
b) dehydrating and subsequent cooling of the mixture to a temperature lower than 55 °C;
c) adding water, proteins and transglutaminase and subsequent mixing at a temperature lower than 55 °C;
d) adding cellulose and subsequent mixing;
e) optional addition of lubricant and/or emulsifier and subsequent mixing;
f) optional granulation.

## Patentansprüche

1. Zusammensetzung, umfassend 40-70 Gewichts-% Stärke, 8-40 Gewichts-% eines Plastifizierungsmittels, 5-30 Gewichts-% Cellulose, 0,5-5 Gewichts-% Proteine und 0,005-0,05 Gewichts-% einer Transglutaminase, bezogen auf das Gewicht der Zusammensetzung.

2. Zusammensetzung nach Anspruch 1, wobei die Stärke in einer Menge in dem Bereich von 45-50-%, bezogen auf das Gewicht der Zusammensetzung, vorliegt.

3. Zusammensetzung nach Anspruch 1, wobei das Gewichtsverhältnis zwischen Stärke und Plastifizierungsmittel in dem Bereich von 5:1 - 2:1 liegt.

4. Zusammensetzung nach Anspruch 1, wobei die Proteine in einer Menge in dem Bereich von 1 bis 2%, bezogen auf das Gewicht der Zusammensetzung, vorliegen.

5. Zusammensetzung nach Anspruch 1, wobei die Cellulose in einer Menge in dem Bereich von 10-25%, bezogen auf das Gewicht der Zusammensetzung, vorliegt.

6. Zusammensetzung nach Anspruch 1, wobei die Transglutaminase in einer Menge in dem Bereich von 2-3%, bezogen auf das Gewicht der Proteine, vorliegt.

7. Zusammensetzung nach Anspruch 1, wobei das Plastifizierungsmittel ein Polyalkohol ist.

8. Zusammensetzung nach Anspruch 7, wobei der Polyalkohol unter Ethylenglykol, Propylenglykol und Glycerol ausgewählt ist.

9. Zusammensetzung nach Anspruch 1, wobei die Cellulosefasern eine Länge in dem Bereich von 20-1000 µm und/oder einen Durchmesser in dem Bereich von 20-35 µm haben.

10. Zusammensetzung nach Anspruch 1, wobei die Proteine einen Glutamin- und Glycin-Gehalt oder Glutamin- und Lysin-Gehalt von gleich oder größer als 3% bzw. 7% der gesamten Aminosäuren aufweisen.

11. Zusammensetzung nach Anspruch 1, wobei die Proteine ein Molekulargewicht von größer als 10 kDa, vorzugsweise in dem Bereich von 30 - 180 kDa, aufweisen.

12. Zusammensetzung nach Anspruch 1, wobei die Proteine pflanzlichen Ursprungs sind.

13. Zusammensetzung nach Anspruch 1, wobei die Transglutaminase von Mikroorganismen abstammt, vorzugsweise von der Gattung *Streptoverticillium sp.*

14. Zusammensetzung nach Anspruch 1, umfassend ein Gleitmittel, einen Emulgator und/oder Minerallieferanten.

15. Zusammensetzung nach den Ansprüchen 1-14, **dadurch gekennzeichnet, dass** sie in granulierter Form vorliegt.

16. Artikel zum Verpacken und/oder Aufnehmen und/oder der Nahrung dienenden Verwendung, insbesondere aus einer Zusammensetzung nach den Ansprüchen 1 bis 15 zusammengesetzt.

17. Artikel nach Anspruch 16, **dadurch gekennzeichnet, dass** er in Form von flachen Schalen, Schüsseln, tiefen Schalen, Tellern, Besteck, Tassen oder Flaschen vorliegt.

18. Verwendung einer Zusammensetzung nach den Ansprüchen 1 bis 15 zur Herstellung von Artikeln zum Verpacken, zum Kontakt und/oder zur Aufnahme von Nahrungsmitteln, Fluiden und/oder Flüssigkeiten.

19. Verwendung nach Anspruch 18, **dadurch gekennzeichnet, dass** die Artikel in Form von flachen Schalen, Schüsseln, tiefen Schalen, Tellern, Gefäßen, Besteck, Tassen oder Flaschen vorliegt.

20. Verfahren zur Herstellung einer Zusammensetzung nach den Ansprüchen 1-15, umfassend die folgenden Schritte:
a) Mischen von Stärke und Plastifizierungsmittel,
b) Dehydratisieren und anschließendes Kühlen der Mischung auf eine Temperatur von niedriger als 55°C,
c) Zugeben von Wasser, Proteinen und Transglutaminase und anschließendes Mischen bei einer Temperatur niedriger als 55°C,
d) Zugeben von Cellulose und nachfolgendes Mischen,
e) gegebenenfalls Zugeben von Gleitmittel und/oder Emulgator und nachfolgendes Mischen,
f) gegebenenfalls Granulieren.

## Revendications

1. Composition comprenant de 40 % à 70 % en poids d'amidon, de 8 % à 40 % en poids d'un agent plastifiant, de 5 % à 30 % en poids de cellulose, de 0,5 % à 5 % en poids de protéines et de 0,005 % à 0,05 % en poids de transglutaminase, par rapport au poids de la composition.

2. Composition selon la revendication 1, où l'amidon est présent en une quantité comprise dans la plage allant de 45 % à 50 % par rapport au poids de la composition.

3. Composition selon la revendication 1, où le rapport en poids entre amidon et agent plastifiant est compris dans la plage allant de 5:1 à 2:1.

4. Composition selon la revendication 1, où les protéines sont présentes en une quantité comprise dans la plage allant de 1 % et 2 % par rapport au poids de la composition.

5. Composition selon la revendication 1, où la cellulose est présente en une quantité comprise dans la plage allant de 10 % à 25 % par rapport au poids de la composition.

6. Composition selon la revendication 1, où la transglutaminase est présente en une quantité comprise dans la plage allant de 2 % à 3 % par rapport au poids des protéines.

7. Composition selon la revendication 1, où l'agent plastifiant est un polyalcool.

8. Composition selon la revendication 7, où ledit polyalcool est choisi parmi l'éthylène glycol, le propylène glycol et le glycérol.

9. Composition selon la revendication 1, où les fibres de cellulose présentent une longueur comprise dans la plage allant de 20 à 1 000 µm et/ou un diamètre compris dans la plage allant de 20 à 35 µm.

10. Composition selon la revendication 1, où les protéines ont une teneur en glutamine et glycine ou une teneur en glutamine et lysine respectivement égale à ou supérieure à 3 % et 7 % des acides aminés totaux.

11. Composition selon la revendication 1, où les protéines présentent un poids moléculaire supérieur à 10 kDa, de préférence compris dans la plage allant de 30 à 180 kDa.

12. Composition selon la revendication 1, où les protéines sont d'origine végétale.

13. Composition selon la revendication 1, où la transglutaminase provient de micro-organismes, de préférence du genre *Streptoverticillium sp..*

14. Composition selon la revendication 1, comprenant un lubrifiant, un émulsionnant et/ou des charges minérales.

15. Composition selon les revendications 1 à 14, **caractérisée en ce qu'**elle se présente sous forme de granulés.

16. Éléments pour conditionner et/ou contenir et/ou destinés à l'usage alimentaire, composés essentiellement d'une composition selon les revendications 1 à 15.

17. Éléments selon la revendication 16 **caractérisés par** leur forme de corbeilles basses, de bols, de corbeilles hautes, d'assiettes, de couverts, de gobelets et de bouteilles.

18. Utilisation d'une composition selon les revendications 1 à 15 pour la préparation d'éléments pour conditionner, destinés à entrer en contact et/ou à contenir des aliments, des fluides et/ou des liquides.

19. Utilisation selon la revendication 18, **caractérisée en ce que** lesdits articles sont sous la forme de corbeilles basses, de bols, de corbeilles hautes, d'assiettes, de bocaux, de couverts, de gobelets ou de bouteilles.

20. Procédé de production d'une composition selon les revendications 1 à 15, comprenant les étapes suivantes :
a) le mélange d'amidon et d'agent plastifiant ;
b) la déshydratation et le refroidissement ultérieur du mélange jusqu'à une température inférieure à 55 °C ;
c) l'ajout d'eau, de protéines et de transglutaminase suivi par le mélange à une température inférieure à 55 °C ;
d) l'ajout de cellulose suivi par le mélange ;
e) l'ajout optionnel de lubrifiant et/ou d'un émulsionnant suivi par le mélange ;
f) la granulation optionnelle.
